Europäisches Patentamt

European Patent Office

Office européen des brevets

(19)

(11) Veröffentlichungsnummer: **0 082 106**
A2

(12) EUROPÄISCHE PATENTANMELDUNG

(21) Anmeldenummer: 82730144.1

(22) Anmeldetag: 07.12.82

(51) Int. Cl.³: **B 01 D 46/52**, B 01 D 46/10

(30) Priorität: **16.12.81 DE 3150392**

(43) Veröffentlichungstag der Anmeldung: **22.06.83**
**Patentblatt 83/25**

(84) Benannte Vertragsstaaten: **FR GB NL**

(71) Anmelder: **DELBAG-LUFTFILTER GmbH, Holzhauser Strasse 159, D-1000 Berlin 27 (DE)**

(72) Erfinder: **Neumann, Gerhard Max, Lentzeallee 93, D-1000 Berlin 33 (DE)**

(74) Vertreter: **Pfenning, Joachim, Dipl.-Ing., Patentanwälte Henkel Feiler Pfenning Hänzel Meinig & Butenschön Kurfürstendamm 170, D-1000 Berlin 15 (DE)**

(54) Kompaktes Universal-Grossflächenfiltersystem nach dem Baukastenprinzip zur Luftreinigung.

(57) Die Erfindung betrifft einen selbstabdichtenden, auswechselbaren, mit mehreren Zugschlaufen versehenen, zickzackförmig gefalteten, nach Gebrauch wegwerfbaren Filtereinsatz aus Papier, Faservlies oder dergleichen, der nur reinluftseitig mit eingeklebten konischen Abstandshaltern versehen und von einem konischen hutförmigen, einstückigen, reinluftseitig durchbrochenen anflanschbaren Aufnahmerahmen dichtend umgeben ist, dessen Flanschränder in einem U-förmigen Profilrahmen mittels eines elastischen endlosen Gummiringes dichtend gehalten sind, wobei der Profilrahmen mit dem Filtereinsatz ein selbsttragendes, gegeneinander verschraubbares, wandbildendes Filteraufnahmeelement darstellt oder als solches dem Einbau in einfache Standardrahmen für Taschenfiltereinsätze dient.

ACTORUM AG

## Kompaktes Universal-Großflächenfiltersystem nach dem Baukastenprinzip zur Luftreinigung

Die Erfindung betrifft selbstabdichtende auswechselbare großflächige Kompaktfiltereinsätze mit Rahmen oder passend zu einseitig oder beidseitig mit Flanschabbiegungen versehene Aufnahmerahmen zum unmittelbaren Einbau in Wände, Decken oder Gehäuse oder zum wahlweisen Einbau in vorhandene Einbaurahmen mit Anpreßvorrichtungen. Nach einem Vorschlag der Anmelderin ist ein selbstabdichtender großflächiger Filtereinsatz aus Filterpapier oder Faservliesen bestehend mit beidseitig angeordneten konischen Abstandshaltereinlagen als Wegwerfteil ausgebildet, bei dem ein mit Flanschen versehener ständig wiederverwendbarer Filter-Aufnahmerahmen das eigentliche Trage- und Einbaugerüst bildet. Diese Filter-Aufnahmerahmen mit den auswechselbaren selbstabdichtenden Filtereinsätzen sind selbsttragende Gerüste, aus denen Filterwände

- 2 -

und Deckenfiltereinbauten, wie Baukästen, zusammensetzbar sind. Dieselben Filtereinheiten sind auch von den standardisierten handelsüblichen Sack- oder Taschenfilterrahmen aufnehmbar. Hierin werden die Filter durch Spannfedern dichtend angepreßt.

Um den zum Teil sehr kostenintensiven Aufwand von kompakten Großflächenfiltern, zum Beispiel Mehrtaschenfiltern, wegen ihrer Wegwerfkonzeption noch weitgehender zu minimieren und um wertvolle Werkstoffe einzusparen, wurden Wegwerffilter vorgeschlagen, die auch einer umweltfreundlichen Müllentsorgung entsprechen.

Der Erfindung liegt die Aufgabe zugrunde, den Filtereinsatz mit seinem Aufnahmerahmen so auszubilden, daß ihre Herstellung unter optimal günstigen Bedingungen bei geringstmöglichem Kostenaufwand möglich ist bei ebenfalls optimal günstigen und sicheren Betriebsbedingungen, und daß die Filtereinsätze mit ihren Aufnahmerahmen auf einfache und sichere Weise handhabbar und auswechselbar sind bei geringstmöglichem Materialverlust.

Die Lösung dieser Aufgabe besteht darin, daß der großflächige ausschließlich nur reinluftseitig mit eingeklebten konischen Abstandshaltern ausgerüstete und mit mehreren Zugschlaufen versehene zickzack gefaltete nach Gebrauch wegwerfbare Filtereinsatz aus Papier, Faservlies, Watte, Filz oder Schaumstoff von einem etwas konischen, hutförmigen, einstückigen, reinluftseitig durchbrochenen anflanschbaren

- 3 -

Aufnahmerahmen luftabdichtend umgeben ist, der wahlweise entweder aus dünnen Plattenmaterial, aus tiefgezogenem oder gepreßtem Kunststoff, aus Hartfaserpappe oder aus einem mit Filtervlies überzogenem 1 mm dicken Drahtgitternetz mit Maschenweiten von $\sim$ 6 bis 12 mm besteht, dessen rechtwinklig abgebogene Flanschränder etwa 15 bis 20 mm überstehend breit sind und in einem $\geqq$ 25x20x590 mm 1 bis 2 mm dicken U-Profilrahmen, zum Beispiel aus Kunststoff oder Blech, von einem 20 mm dicken elastischen endlosen Gummiring dichtend darin gehalten und angepreßt werden, wobei der U-Profilrahmen mit dem eingeklemmten Filtereinsatz entweder ein selbsttragendes, gegeneinander verschraubbares wandbildendes Filteraufnahmeelement darstellt oder in diesem Zustand dem Einbau in einfache Standardrahmen für Taschenfiltereinsätze dient. Ein wesentlicher Vorteil besteht hierbei in der Einsparung der staubluftseitigen Abstandshalter der als Mehrtaschenfilter ausgebildeten Kompaktfiltereinsätze und in dem Fortfall von breiten Metallrahmen für den Filtereinsatz. Statt dessen werden billige wegwerfbare Filtereinsatzumrandungen mit wiederverwendbaren Profilrahmen benutzt.

Eine weitere Ausbildung der Erfindung ist dadurch gekennzeichnet, daß der mit Zugschlaufen und mit einem Flanschrand versehene rechteckige Aufnahmerahmen für den Filtereinsatz aus einem langgestreckten 0,5 bis 1,5 mm dicken Stück eines 50 bis 300 mm breiten Z-Profils durch Zusammenfaltung hergestellt ist, dessen nach innen und außen gebogene Flanschränder

- 4 -

jeweils 15 bis 20 mm breit sind und dessen offene vierseitige Ecken an der Frontseite durch zum Beispiel aufgesetzte Dreiecksstücke abgedeckt sind und dessen Außenabmessungen im Flanschbereich ~ 580x580 mm und im Filtereinsatz-Aufnahmebereich ~ 550x550 mm betragen, wobei das letztere Maß jeweils in etwa halbierbar ist.

Eine weitere Ausgestaltung der Erfindung bezieht sich darauf, daß der gefaltete Filtereinsatz mit einer selbstklebenden zusammenhaltenden Bandage umwickelt ist und in den hutförmigen einstückig etwas konisch hergestellten rückseitig durchbrochenen mit einem Flanschrand versehenen Aufnahmerahmen, der innen mit einer Filtervliesschicht oder Watteschicht umlaufend ausgekleidet ist, mit Klebstoffhilfe dichtend darin einsetzbar ist.

Die Erfindung ist weiterhin dadurch gekennzeichnet, daß die Einklemmung des Aufnahmerahmenflansches des Filters in dem eckigen, nach innen offenen U-Profilrahmen wahlweise durch eine endlose 18 bis 22 mm dicke elastische volle Moosgummirundschnur, durch eine quadratische oder durch eine mehreckige Rundschnur oder durch eine mittig umlaufend etwas eingeschlitzte eckige Rundschnur aus Naturgummi, Kunststoff, Schaumstoff oder durch eine Zellpolyäthylen-Moosgummischnur mit geschlossener Haut erfolgt, wobei jede Schnur mit mindestens einem Reißlappen versehen ist und ein Längenmaß von 1800 bis 2000 mm für einen beispielsweise U-Profilrahmen von 590x590 mm aufweist, während bei einer weiteren beispielsweise Filtereinsatzausführung unter Weglassung des Flanschrandes ein quadratischer endlos umlaufender elastischer Gummirahmen 25x25 mm die Funktion eines solchen übernimmt.

In einer weiteren Ausbildung der Erfindung ist der umlaufende durch die Klemmschnur eingeklemmte Flansch des Aufnahmerahmens für den Filtereinsatz wahlweise nach innen und nach außen im U-Profilrahmen dichtend anliegend oder bedarfsweise in Schlitzmitte des Klemmgummis oder der elastischen Schnur angeordnet.

Die Erfindung ist weiterhin dadurch bestimmt, daß der eckige Filtereinsatz-Aufnahmerahmen zum Beispiel aus wasserfester Pappe oder aus Kunststoff hergestellt ist, bei dem die vier verstärkten Flanschaußenecken eine Verformung aufweisen, die durch je eine diagonal verlaufende Knickfalte gebildet wird und so ein nach innen oder nach außen gerichtetes Einbiegen oder Einziehen des gesamten umlaufenden Flanschrandes beim Filteraustausch ermöglicht.

Eine weitere Ausgestaltung der Erfindung besteht darin, daß der Filtereinsatz mit dem einstückigen Aufnahmerahmen aus biologisch leicht abbaubaren Wegwerfmaterial zwecks Einbringung in einen Standard-Taschenfilter-Aufnahmerahmen mit seinen inneren Flanschseiten an der Rahmendichtung anliegt und der U-Profilrahmen mit einer mittig ausgesteiften faserigen oder

- 6 -

Schaumstoff-Vorfiltermatte ausgefüllt ist und dabei gleichzeitig über die Druckfedern der Aufnahmerahmen eine Halte- und Anpreßfunktion über die gesamte Flanschfläche des Filtereinsatzes ausübt.

Die Ausbildung einer weiteren Variante der Erfindung besteht darin, daß die von der Reinluftseite her zu erfolgende Einbringung der konischen Abstandshalter in die Zickzack- Falten unter Zuhilfenahme von versprühbaren, schnell aushärtbaren Kunststoffen oder von Dispersionsklebstoffen erfolgt und wahlweise auf beiden Seiten des jeweiligen Abstandshalters aus konisch gewelltem Drahtgewebe, aus konisch gewellter Alufolie oder aus konisch gewellter wasserfester Pappe vor dem Einstecken in die Falten aufgetragen werden.

Ein anderes Merkmal der Erfindung ist noch darin zu sehen, daß die einseitige reinluftseitige Anordnung von permanent haftenden konischen Abstandshaltern in den Falten des Filtereinsatzes aus Papier oder Faservlies eine entsprechende Gegenhaltung von wiederentfernbaren etwas kürzeren oder kleineren Keilschablonen beim Zusammenbau voraussetzt, die das Filtermaterial fest einspannen.

In Ausweitung des Erfindungsgedankens besteht die Lösung der erfinderischen Aufgabe noch darin, daß nach Einbringung der wahlweise verschiedenen haftenden konischen Abstandshalter und wiederentfernbaren etwas kürzeren oder kleineren Keilschablonen die Falten des Filtereinsatzes aus Papier oder Faservlies alle umlaufenden Außenflächen vor dem Schließen des einstückigen Aufnahmerahmens mit einer schnell aushärtenden Klebepaste mittels eines Großflächenauftragegeräts beschichtet werden.

Schließlich ist die Erfindung noch dadurch gekennzeichnet, daß der den Filtereinsatz aufnehmende U-Profilrahmen 590x590 mm oder 590x285 mm aus einem 0,6 mm dicken Kunststoffmaterial oder Blech gefertigt ist, dessen Hochkantflanschseiten jeweils 15 mm lang sind und dessen vereinzelt gelochte, durch die Gummischnüre verdeckte, Rückenseiten jeweils 25 mm betragen und dazu dienen, durch eine Schraubverbindung mit benachbarten U-Profilrahmen oder Versteifungsblechen zusammen steife und selbsttragende Filtertragegerüste zu bilden oder als Einzelrahmen mit den Filtereinsätzen den Einbau in Standard-Taschenfilter-Aufnahmerahmen zu ermöglichen.

Ausführungsbeispiele der Erfindung sind in den Zeichnungen dargestellt und werden nachstehend näher beschrieben.

Fig. 1 zeigt den kompletten zickzack gefalteten Filtereinsatz mit einseitig eingebrachten konischen Abstandshaltern und den Zug- oder Bedienungsschlaufen einschließlich eines konischen rückseitig einstückigen mit Flanschrand versehenen Aufnahmerahmens.

Fig. 2 stellt in Reihe hintereinander dar: eine elastische abdichtende und festhaltende

- 8 -

endlose Gummischnur mit Zugschlaufe, einen kompletten einstückigen Faltfiltereinsatz, ebenfalls mit Zugschlaufen und dem aufnehmenden Rahmen mit Flanschrand und Verstärkungsecken und schließlich den erforderlichen U-Profilrahmen, in dem die Gummischnur und der Filtereinsatz mit seinem umlaufenden Flanschrand eingebettet wird.

Fig. 3 stellt die komplett montierte Filtereinheit gemäß der Erfindung dar.

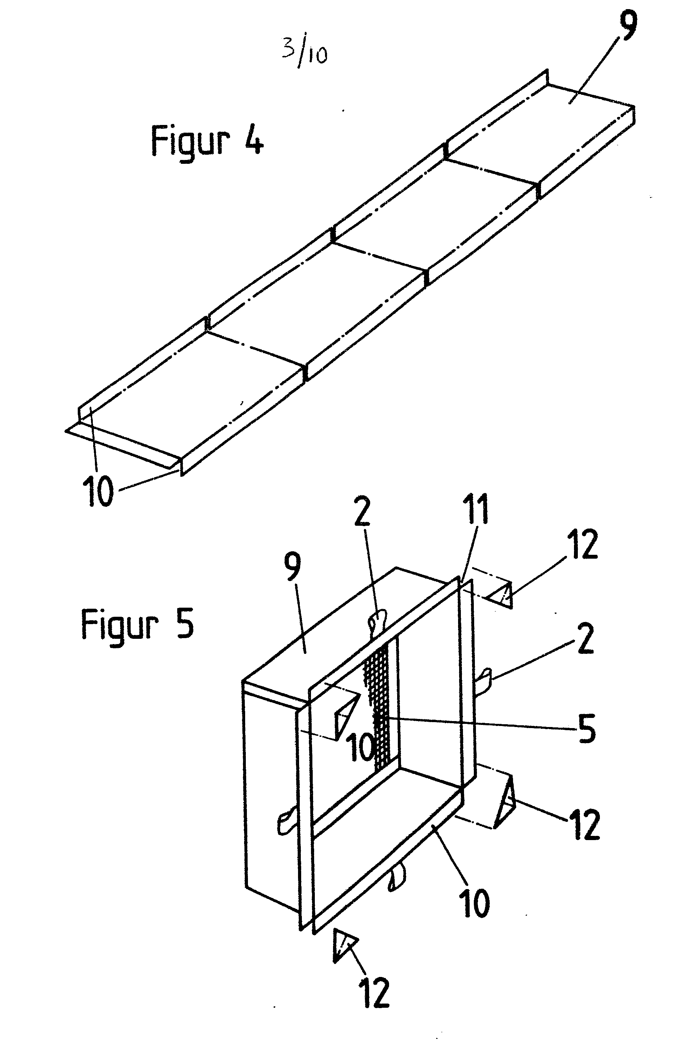

Fig. 4 ist die Darstellung eines langgestreckten einstückigen mit den Biegelinien versehenen Z-Rahmenteils, das durch Zusammenfalten einen eckigen Aufnahmerahmen ergibt.

Fig. 5 ist der komplett zusammengesetzte Z-förmige Aufnahmerahmen mit rückseitiger Gitterabdeckung und den Versteifungsdreiecken zum Abblenden der vierseitig offenen Flanschränder einschließlich der Zugschlaufen.

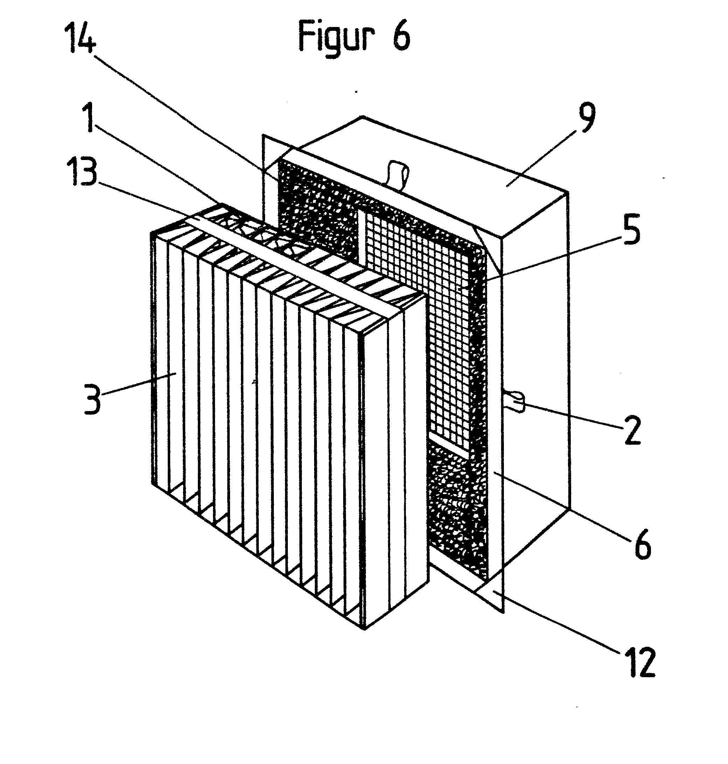

Fig. 6 ist die Darstellung eines kompletten bandagierten gefalteten Filtereinsatzes mit einem dahinter gezeichneten Aufnahmerahmen mit rückseitigen Gitterwerk und mit einer allseitigen Innenauskleidung bestehend aus einer Filtervliesschicht oder Watteschicht.

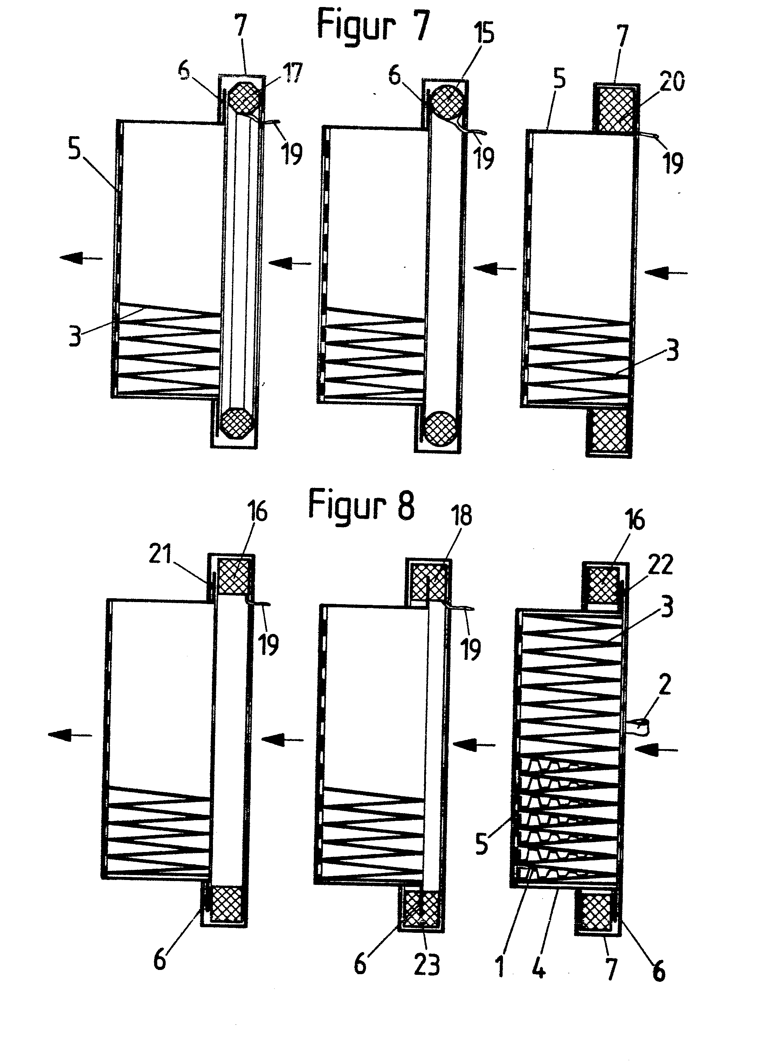

Fig. 7 zeigt drei Variationen der Einbringung, Halterung und Abdichtung von Einweg-Filtereinsätzen mit Aufnahmerahmen in wiederverwendbare U-Profilrahmen mittels einer elastischen Mehrkantschnur oder einer Rundschnur zum Einklemmen der Flanschränder oder eines Filtereinsatzes mit Aufnahmerahmen ohne Flanschrand,
der durch einen angeklebten oder anvulkanisierten quadratischen, elastischen endlosen
Gummiring ersetzt ist und zur direkten
dichtenden Aufnahme des Filters im U-Profilrahmen dient.

Fig. 8 ist eine Darstellung von weiteren drei
Variationen der Filterabdichtung im U-Profilrahmen, wobei eine Ausführung den Flanschrand
des Filtereinsatz-Aufnahmerahmens mit einem
elastischen quadratischen Gummiklemmring
innenseitig und die andere Ausführung vorderseitig einspannt, während die Mitteldarstellung den Flanschrand mittig in einer geschlitzten Quadratgummischnur festhält, die
ihrerseits vom U-Profilrahmen dichtend gehalten wird.

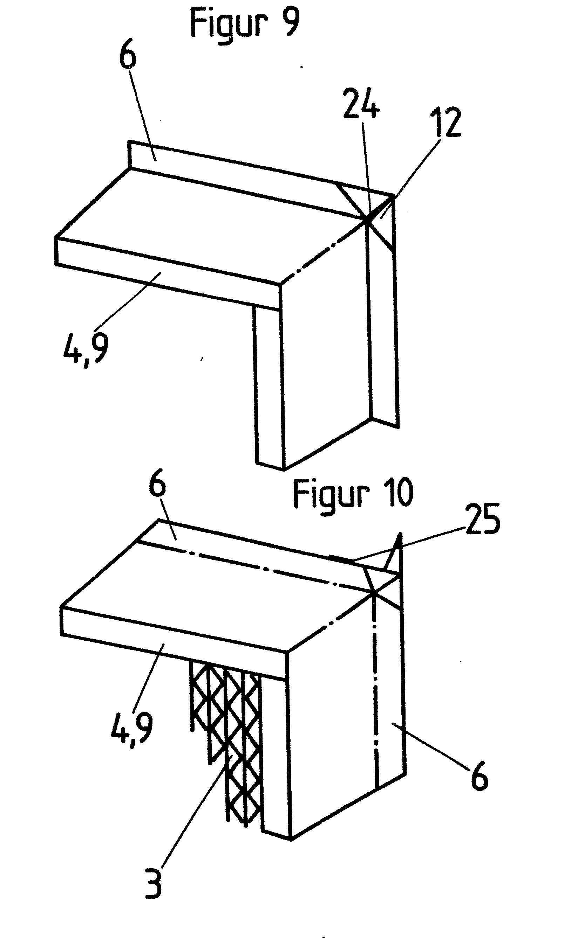

Fig. 9 zeigt den Eckenausschnitt eines Aufnahmerahmens für den Filtereinsatz mit einer
eingesetzten dreieckigen verstärkten Flanschaußenecke, die eine diagonal verlaufende
Knickfalte aufweist.

Fig. 10 zeigt den Eckenausschnitt des Rahmens
mit nach vorn eingeknicktem Flanschrand des
Filtereinsatzes zum besseren Entnehmen aus
dem nicht dargestellten U-Profilrahmen.

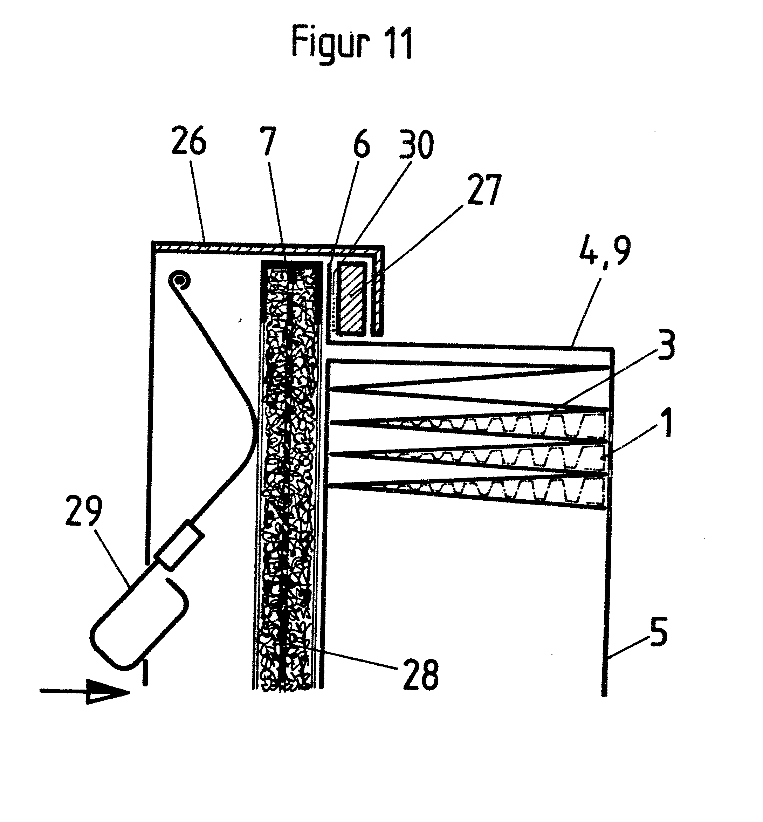

Fig. 11 ist eine Skizze zur Verdeutlichung,
wie der U-Profilrahmen als gefülltes Vorfilter
mit einer mittig ausgesteiften Faserschicht
als Zwischenglied zum Anpressen des Filtereinsatz-

- 10 -

Rahmenflansches in einem mit Dichtung versehenen standardisierten Taschenfilterrahmen mit Druckfederanspannung benutzt werden kann.

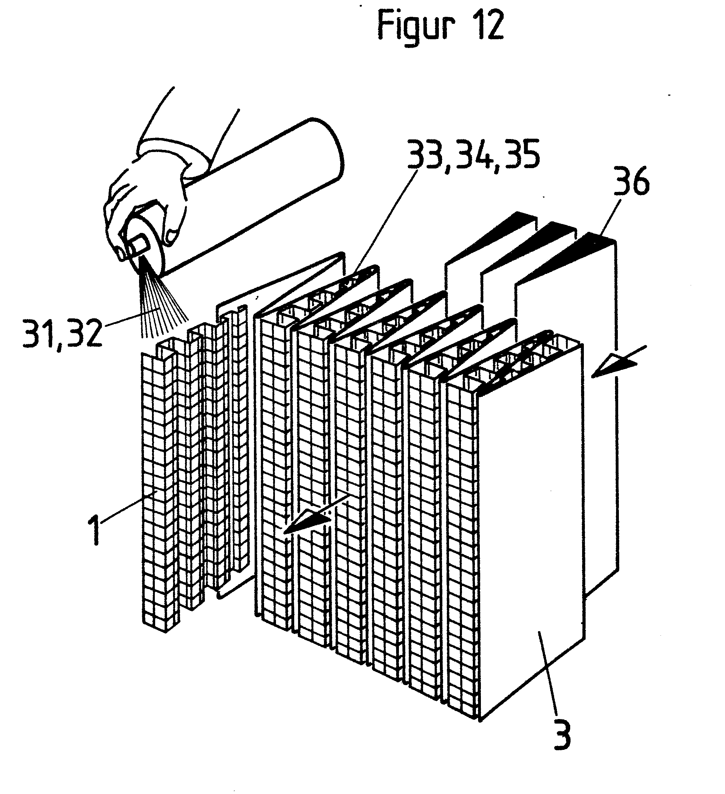

Fig. 12 ist eine Montagedarstellung, wie der konische Abstandshalter beidseitig mit einem Haftmittel versehen von der Reinluftseite her in die Zickzack-Falten des Filtereinsatzes eingeschoben wird und wie von der Gegenseite eine wieder entnehmbare Keilschablone eingeführt wird, um das Filtermaterial fest einzubinden und exakt zu fixieren.

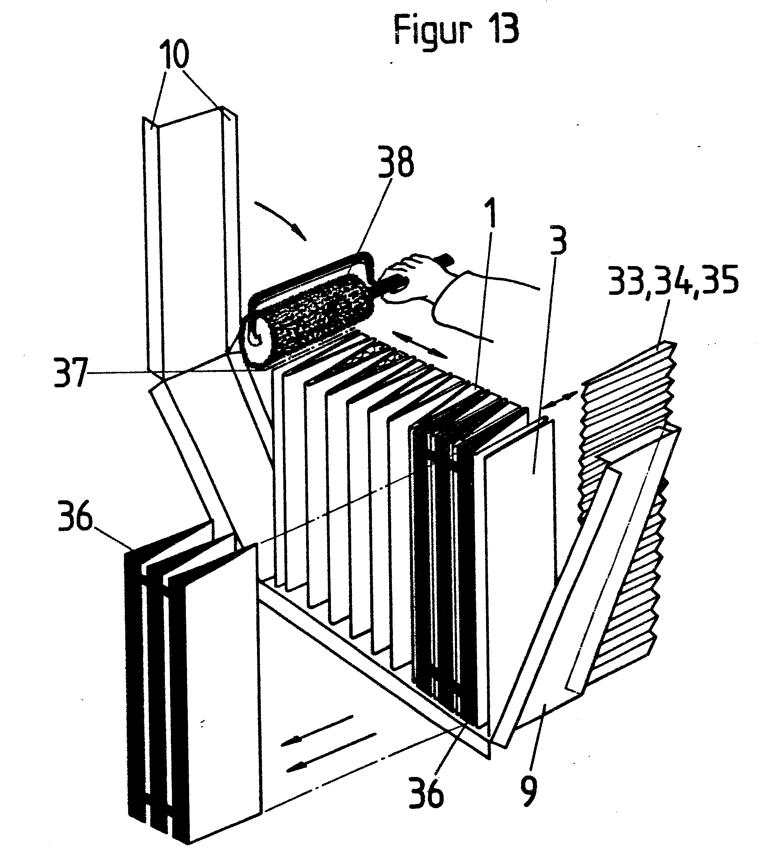

Fig. 13 zeigt einen aufgeklappten einstückigen Filteraufnahmerahmen mit den Abstandshaltern und mit den Keilschablonen und das Auftragsgerät zum Bestreichen der Filteraußenflächen mit einer aushärtenden Paste vor dem Zusammenfalten und Schließen des Rahmens.

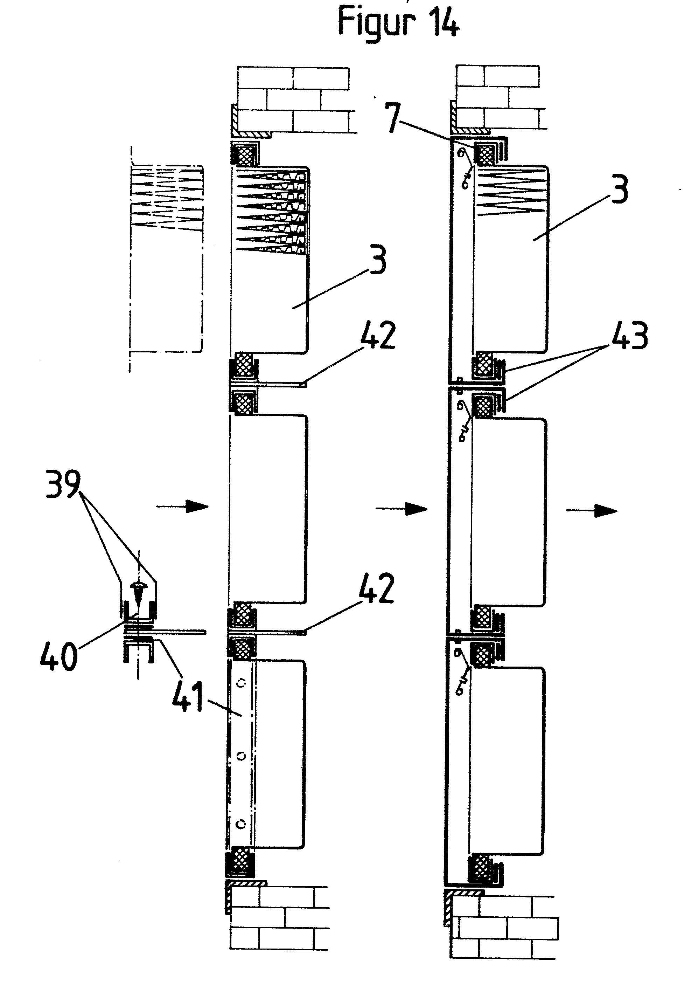

Fig. 14 ist schließlich noch eine Schnittdarstellung der Verwendung der erfindungsgemäßen Filtereinheiten in einer Wandanlage als selbsttragende Einheiten mit Verstärkungsblechen oder als Einbauteil in vorhandene Taschenfilter- Aufnahmerahmen mit Federanpressung.

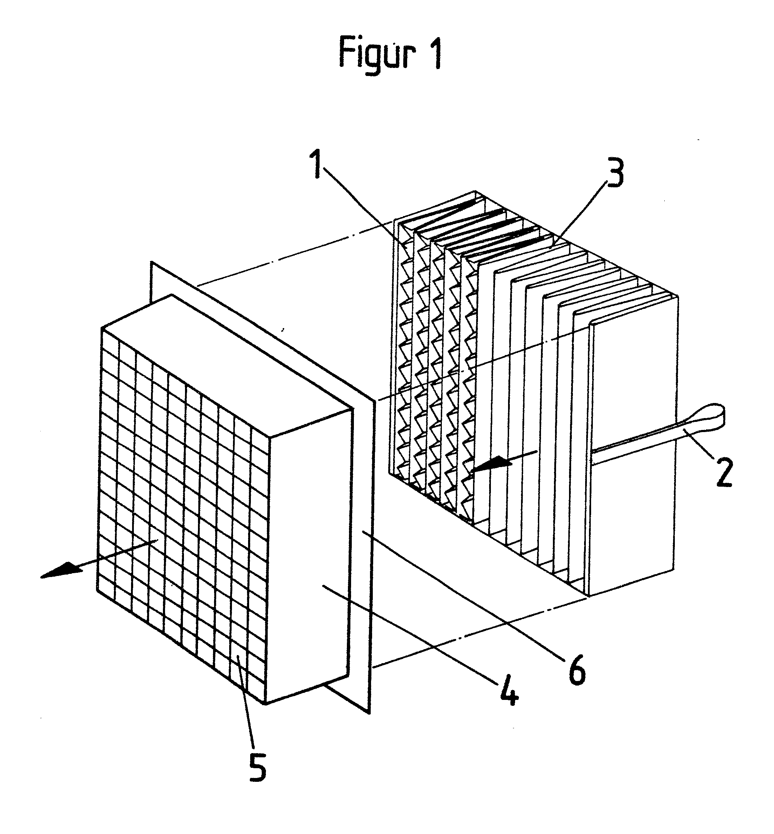

Gemäß Fig. 1 besteht der Filtereinsatz zunächst aus dem zickzack gefalteten Filtermaterial 3 mit den einseitig auf der Reinluftseite eingeklebten konischen Abstandshaltern 1 und den daran befestigten Zug- oder Bedienungsschlaufen 2. Dieser Filtereinsatz 1, 2 und 3 wird von einem einstückig hergestellten hinterseitig durchbrochenen 5 mit einem Flanschrand 6 versehenen Aufnahmerahmen 4 aufgenommen und luftdicht darin befestigt.

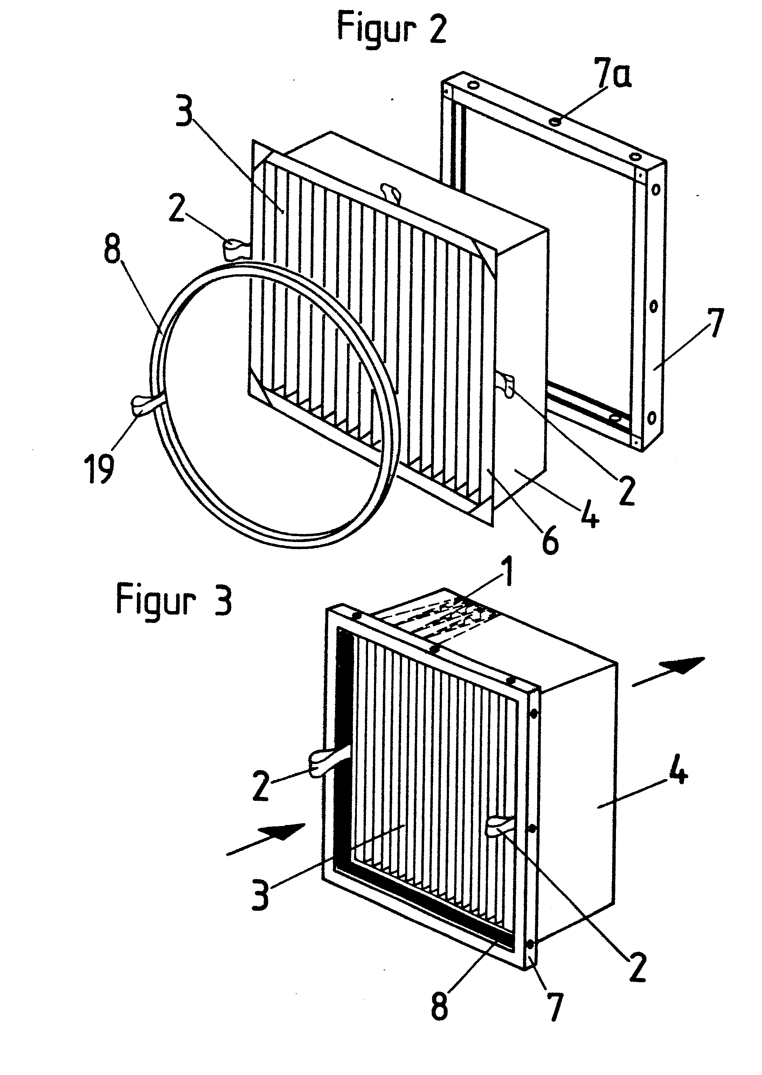

Nach Fig. 2 besteht die erfindungsgemäße Filterkonstruktion im einzelnen aus einem abdichtenden und einklemmenden elastischen Gummiring oder einer endlosen Klemmschnur 8 mit einem Reißlappen 19. Ein weiterer Bestandteil dieser Konstruktion gemäß Fig. 2 ist der eigentliche Filtereinsatz 1, 2 und 3 mit dem Aufnahmerahmen 4 und den Flanschrändern 6. Schließlich gehört zu dieser Filtereinheit nach Fig. 2 noch ein einstückiger, am Umfang vereinzelt gelochter 7a U-profilförmiger Rahmen 7, dessen Schenkel beidseitig nach innen gebogen sind.

Aus der Fig. 3 ist ein komplettes Filterelement ersichtlich. Hieraus geht deutlich hervor, wie mit dem elastischen Gummiring oder Klemmring 8 der allseitige Flanschrand 6 des Filtereinsatzes 3 mit dem einstückigen Aufnahmerahmen 4 im gelochten U-Profilrahmen 7 eingespannt und abgedichtet wird. Die angedeuteten Zugschlaufen 2 bewirken dabei ein leichteres Entnehmen des Einsatzes aus dem U-Profilrahmen 7 beim Filtertausch. Die eingezeichneten rückwärtig eingesetzten haftenden konischen Abstandshalter 1 bewirken die gewünschte Distanzhalterung und Abstützung der leichten Filterstoffe gegen Aufblasen durch den Luftstrom und geben dem Filtereinsatz darüber hinaus noch die erforderliche Stabilität und Standfestigkeit.

- 12 -

Die Fig. 4 und 5 veranschaulichen die Konstruktionsmerkmale des Filtereinsatz-Aufnahmerahmens 9 aus einem langgestreckten Z-Profil mit beidseitig abgeknickten Flanschrändern 10. Dieses Profilband 9 wird durch Zusammenfaltung zu einem hutförmigen Gehäuse geformt mit einem nach außen rechtwinklig abgeknickten Flanschrand 10, dessen offene Eckenkanten durch vier Dreiecke 12 abgedeckt werden. Die Zugschlaufen 2 sind bedienungsnotwendig.

Gemäß Fig. 6 ist der gefaltete Filtereinsatz 3 mit den rückseitig eingebrachten anhaftenden konischen Abstandshaltern 1, zum Beispiel aus einem gefalteten Drahtnetz, durch eine selbstklebende umlaufende stramm anliegende Bandage 13 gesichert. In diesem Zustand wird der Filtereinsatz 3 in den innen mit Vlieswatte oder Schaumstoff 14 ausgekleideten Aufnahmerahmen 9 eingeschoben und mit Haftmittel abdichtend befestigt. Die Reinluftseite ist mit einem Gitternetz 5 abgestützt und gesichert.

Aus den Fig. 7 und 8 sind die verschiedenen Varianten der endlosen Klemmringe aus elastischem Material ersichtlich. Der zum Beispiel aus Zellpolyäthylen-Moosgummi bestehende Klemmring kann danach entweder mehreckig 17 bzw. rund 15 oder quadratisch 16 sein. Eine weitere Version ist eine in der Mitte geschlitzte 23 Gummischnur 18 mit einem Reißlappen 19. Hierin wird der Flanschrand 6 des Filtereinsatzes 3 mit dem hinten durchbrochenen 5 Aufnahmerahmen 4 oder 9 dichtend eingebettet.

Am Aufnahmerahmen 5 mit dem Filtereinsatz 3 ist der umlaufende endlose quadratische Gummiring 20 auf die Außenfläche statt eines Flanschrandes aufgeklebt oder aufvulkanisiert. Dieser Gummiflansch 20 wird mit dem Filter 3 zusammen in den U-Profilrahmen 7 dichtend eingedrückt und mit Hilfe des Reißlappens 19 wieder entnommen. Alle übrigen Klemmringe werden auf die gleiche Weise wie zuvor in den U-Profilrahmen 7 zur Halterung und Abdichtung der Flanschränder 6 der Filtereinsätze 3 eingesetzt, wobei der Flanschrand 6 wahlweise oder nach Bedarf hinten 21 oder vorn 22 im U-Profilrahmen zur Anlage kommt.

Die Fig. 9 und 10 stellen heraus, wie der biegsame Flanschrand 6 des Aufnahmerahmens 4 und 9 durch den Anbau von biegsamen Eckenverstärkungen 12, die mit diagonal verlaufenden Knickfalten 24 versehen sind, ausgerüstet ist, um beim Ausbau aus dem U-Profilrahmen 7 den Flanschrand 6 nach hinten oder vorn herausbiegen zu können zur leichteren Entnahme der Filtereinsätze 3 beim Filtertausch. Dabei sind die Flächenebenen vom Aufnahmerahmen 4 und 9 mit dem Flanschrand jeweils planparallel 25.

Gemäß Fig. 11 wird der U-Profilrahmen 7 als Vorfilteraufnahmeteil für eine mittig abgestützte Faserfiltermatte 28 benutzt. Beim Einbau von Filtereinsätzen und den konischen Abstandshaltern 1 und mit den Aufnahmerahmen 4 und 9 in einem standardisierten Taschenfilter-

- 14 -

Aufnahmerahmen 26, zum Beispiel für den Wandeinbau, legt sich der Flanschrand 6 des hinten
mit Gitternetz 5 versehenen Filters 3 an dessen
Dichtung 27 an. über die Druckfedern 29 und
über die Flächen 30 wird der umlaufende Flanschrand 6 vom Vorfilterprofilrahmen 7 fest angepreßt und gleichzeitig abgedichtet.

Aus der Fig. 12 wird deutlich, wie die reinluftseitigen Abstandshalter 1 zur Abstützung
des zickzack gefalteten Filtermaterials 3
mit Hilfe von versprühbaren, aushärtbaren
Kunst- 31 oder Klebstoffen 32 zuvor beidseitig beschichtet werden. Danach werden die
verschiedenen konischen wahlweisen Abstandshalter 33, 34 oder 35 in die Filterfalten
eingebracht und haften dort sofort fest.
Gleichzeitig werden zur festen Halterung und
Fixierung des Filtermaterials von der anderen,
gegenüberliegenden Faltenseite Keilschablonen
36 eingeschoben, die etwas kleiner oder kürzer
in der Höhe sind. Nach dem Abbindeprozeß
aller Leim- oder Klebevorgänge werden die
Keilschablonen wieder entnommen.

In der Fig. 13 ist dieser Zusammenbauvorgang
besonders anschaulich dargestellt. Der Verschluß des einstückigen faltbaren oder zusammenklappbaren Aufnahmerahmens 4 und 9 um den
Filtereinsatz 3 herum, mit den einseitig
eingeschobenen fest haftenden Abstandshaltern 1
und den gegenüberliegenden Keilschablonen 36,
erfolgt erst, wenn mit dem Auftragsgerät 38
alle vier Außenflächen des Filters 3 mit
einer schnell aushärtenden Klebepaste 37 beschichtet oder bestrichen worden sind. Nach dem Aushärten des Klebers 37 und nach dem Verschluß des Aufnahmerahmens 9 und 10 werden die Keilschablonen 36 entnommen.

Aus der Fig. 14 ist schließlich noch ersichtlich, daß der am Umfang gelochte U-Profilrahmen 7 (590x590 oder 590x285 mm) in den Profilmaßen 15x25 mm als Filtereinsatzaufnahmeteil in der Lage ist, als selbsttragendes Gerüst in Verbindung mit Versteifungsblechen 42 eine Filterwand mit den Filtereinsätzen 3 zu bilden. Durch Schraubverbindungen 40 können die benachbarten U-Profilrahmen, wie Baukästen, dichtend über- und nebeneinander verbunden werden. Gleichzeitig können die U-Profilrahmen 7, deren seitliche Schenkel 39 etwa 15 mm hoch sind und dessen vereinzelt gelochte 7a Rückenflächen 25 mm breit sind mit den Filtereinsätzen 3 auch als Einzelrahmen in vorhandene Standard-Taschenfilterrahmen 43 eingespannt und festgeklemmt werden.

Die Vorteile dieser Konstruktion sind dadurch begründet, daß der wiederverwendbare oder stationär einbaubare U-Profilrahmen ein kostensparendes, dünnwandiges und schmales Billigteil ist, der nicht - wie vergleichbare Taschenfilterrahmen - mit dem Filter zusammen nach dem Gebrauch mit weggeworfen wird. Der Filtereinsatz hat gegenüber vergleichbarer Konstruktionen den Vorteil, daß die Abstandshalter nur einseitig auf der Reinluftseite angeordnet sind und nicht wie bei den bekannten Filtern die Distanzierungshilfen auf beiden

- 16 -

Seiten. Das erspart die Hälfte der Kosten bei gleicher Festigkeit ohne Einbuße der Funktion.

Ein weiterer Vorteil besteht darin, daß der Aufnahmerahmen des Filtereinsatzes aus einem hutförmigen, einstückigen, tiefgezogenen, rückseitig durchbrochenen Körper besteht, der aus einem dünnen ziehfähigen, kostensparenden Material hergestellt ist und gleichzeitig mit einem umlaufenden Flanschrand ausgestattet ist, der zur Halterung und Abdichtung dient. Das Einsetzen des Filtereinsatzes in diesen Rahmenkörper und seine Fixierung darin sind einfacher und billiger zu handhaben als bei vergleichbaren Konstruktionen. Die einstückige, langgestreckte Z-Profil Aufnahmerahmen-Version ist vorgeknickt faltbar und um den Filtereinsatz herum - mit Kleber beschichtet - zusammenlegbar, was bei der Herstellung der Filter enorme Fertigungskosten einspart.

- 1 -

Patentansprüche

1. Selbstabdichtende auswechselbare großflächige Kompaktfiltereinsätze mit Rahmen oder passend zu einseitig oder beidseitig mit Flanschabbiegungen versehene Aufnahmerahmen zum unmittelbaren Einbau in Wände, Decken oder Gehäuse oder zum wahlweisen Einbau in Einbaurahmen mit Anpreßvorrichtungen, d a d u r c h   g e k e n n z e i c h n e t , daß der großflächige ausschließlich nur reinluftseitig mit eingeklebten konischen Abstandshaltern (1) ausgerüstete und mit mehreren Zugschlaufen (2) versehene zickzack gefaltete nach Gebrauch wegwerfbare Filtereinsatz (3) aus Papier, Faservlies, Watte, Filz oder Schaumstoff von einem etwas konischen, hutförmigen, einstückigen, reinluftseitig durchbrochenen (5) anflanschbaren Aufnahmerahmen (4) luftabdichtend umgeben ist, der wahlweise entweder aus dünnem Plattenmaterial, aus tiefgezogenem oder gepreßtem Kunststoff, aus Hartfaserpappe oder aus einem mit Filtervlies überzogenem 1 mm dicken Drahtgitternetz mit Maschenweiten von ∼ 6 bis 12 mm besteht, dessen rechtwinklig abgebogene Flanschränder (6) etwa 15 bis 20 mm überstehend breit sind und in einem ≧ 25x20x590 mm 1 bis 2 mm dicken U-Profilrahmen (7), zum Beispiel aus Kunststoff oder Blech, von einem 20 mm dicken elastischen endlosen Gummiring (8) dichtend darin gehalten und angepreßt werden, wobei der U-Profilrahmen (7) mit dem eingeklemmten Filtereinsatz entweder ein selbsttragendes,

- 2 -

gegeneinander verschraubbares wandbildendes Filteraufnahmeelement darstellt oder in diesem Zustand dem Einbau in einfache Standardrahmen für Taschenfiltereinsätze dient.

2. Selbstabdichtende auswechselbare großflächige Kompaktfiltereinsätze mit Rahmen nach Anspruch 1, dadurch gekennzeichnet, daß der mit Zugschlaufen (2) und mit einem Flanschrand (6) versehene rechteckige Aufnahmerahmen (4) für den Filtereinsatz (3) aus einem langgestreckten 0,5 bis 1,5 mm dicken Stück eines 50 bis 300 mm breiten Z-Profils durch Zusammenfaltung hergestellt ist, dessen nach innen und außen gebogene Flanschränder (10) jeweils 15 bis 20 mm breit sind und dessen offene vierseitige Ecken (11) an der Frontseite durch zum Beispiel aufgesetzte Dreiecksstücke (12) abgedeckt sind und dessen Außenabmessungen im Flanschbereich ～580x580 mm und im Filtereinsatz-Aufnahmebereich ～550x550 mm betragen, wobei das letztere Maß jeweils in etwa halbierbar ist.

3. Selbstabdichtende auswechselbare großflächige Kompaktfiltereinsätze mit Rahmen nach Anspruch 1 und 2, dadurch gekennzeichnet, daß der zickzack gefaltete Filtereinsatz (3) mit einer selbstklebenden zusammenhaltenden Bandage (13) umwickelt ist und in den hutförmigen einstückig etwas konisch hergestellten rückseitig durchbrochenen (5) mit einem Flanschrand (6) versehenen Aufnahmerahmen (4), der innen mit einer Filtervliesschicht (14) oder Watteschicht umlaufend ausgekleidet ist, mit

- 3 -

Klebstoffhilfe dichtend darin einsetzbar
ist.

4. Selbstabdichtende auswechselbare großflächige
Kompaktfiltereinsätze mit Rahmen nach den
Ansprüche 1 bis 3, dadurch gekennzeichnet,
daß die Einklemmung des Aufnahmerahmenflansches (6) des Filters (1,2,3,4 und 5)
in dem eckigen, nach innen offenen U-Profilrahmen (7) wahlweise durch eine endlose
18 bis 22 mm dicke elastische volle
Moosgummirundschnur (15), durch eine quadratische (16) oder durch eine mehreckige Rundschnur (17) oder durch eine mittig umlaufend
etwas eingeschlitzte eckige Rundschnur (18)
aus Naturgummi, Kunststoff, Schaumstoff oder
durch eine Zellpolyäthylen-Moosgummischnur
mit geschlossener Haut erfolgt, wobei jede
Schnur mit mindestens einem Reißlappen (19)
versehen ist und ein Längenmaß von 1800
bis 2000 mm für einen beispielsweise U-Profilrahmen von ∿ 590x590 mm aufweist, während bei
einer weiteren beispielsweise Filtereinsatzausführung unter Weglassung des Flanschrandes ein quadratischer endlos umlaufender
elastischer Gummirahmen (20) 25x25 mm die
Funktion eines solchen übernimmt.

5. Selbstabdichtende auswechselbare großflächige
Kompaktfiltereinsätze mit Rahmen nach den
Ansprüchen 1 bis 4, dadurch gekennzeichnet,
daß der umlaufende durch die Klemmschnur
eingeklemmte Flansch (6) des Aufnahmerahmens
(4 und 9) für den Filtereinsatz (3) wahlweise
nach innen (21) oder nach außen (22) im

- 4 -

U-Profilrahmen (7) dichtend anliegend oder bedarfsweise in Schlitzmitte (23) des Klemmgummis oder der elastischen Schnur (15,16,17, 18,20) angeordnet ist.

6. Selbstabdichtende auswechselbare großflächige Kompaktfiltereinsätze mit Rahmen nach den Ansprüchen 1 bis 5, dadurch gekennzeichnet, daß der eckige Filtereinsatz-Aufnahmerahmen (4 und 9) zum Beispiel aus wasserfester Pappe oder aus Kunststoff hergestellt ist, bei dem die vier verstärkten Flanschaußenecken (12) eine Verformung aufweisen, die durch je eine diagonal verlaufende Knickfalte (24) gebildet wird und so ein nach innen oder nach außen gerichtetes Einbiegen oder Einziehen (25) des gesamten umlaufenden Flanschrandes (6) beim Filteraustausch ermöglicht.

7. Selbstabdichtende auswechselbare großflächige Kompaktfiltereinsätze mit Rahmen nach den Ansprüchen 1 bis 6, dadurch gekennzeichnet, daß der Filtereinsatz (3) mit dem einstückigen Aufnahmerahmen (4 und 9) aus biologisch leicht abbaubaren Wegwerfmaterial zwecks Einbringung in einen Standard-Taschenfilter-Aufnahmerahmen (26) mit seinen inneren Flanschseiten (6) an der Rahmendichtung (27) anliegt und der U-Profilrahmen (7) mit einer ausgesteiften faserigen oder Schaumstoff-Vorfiltermatte (28) ausgefüllt ist und dabei gleichzeitig über die Druckfedern (29) der Aufnahmerahmen (26) eine Halte- und Anpreßfunktion über die gesamte umlaufende Flanschfläche (30)

- 5 -

des Filtereinsatzes (3) ausübt.

8. Selbstabdichtende auswechselbare großflächige Kompaktfiltereinsätze mit Rahmen nach den Ansprüchen 1 bis 7,dadurch gekennzeichnet, daß die von der Reinluftseite her zu erfolgende Einbringung der konischen Abstandshalter in die Zickzack-Falten unter Zuhilfevon versprühbaren, schnell aushärtbaren Kunststoffen (31) oder von Dispersionsklebstoffen (32) erfolgt und wahlweise auf beiden Seiten des jeweiligen Abstandshalters (1) aus konisch gewelltem Drahtgewebe (33), aus konisch gewellter Alufolie (34) oder aus konisch gewellter wasserfester Pappe (35) vor dem Einstecken in die Falten aufgetragen werden.

9. Selbstabdichtende auswechselbare großflächige Kompaktfiltereinsätze mit Rahmen nach den Ansprüchen 1 bis 8, dadurch gekennzeichnet, daß die einseitige reinluftseitige Anordnung von permanent haftenden konischen Abstandshaltern (1) in den Falten des Filtereinsatzes (3) zum Beispiel aus Papier oder Faservlies eine entsprechende Gegenhaltung von wiederentfernbaren etwas kürzeren oder kleineren Keilschablonen (36) beim Zusammenbau voraussetzt, die das Filtermaterial fest einspannen.

10.Selbstabdichtende auswechselbare großflächige Kompaktfiltereinsätze mit Rahmen nach den Ansprüchen 1 bis 9, dadurch gekennzeichnet, daß nach Einbringung der wahlweise verschiedenen haftenden konischen Abstandshalter (33,34,35) und wiederentfernbaren etwas kürzeren oder kleineren Keilschablonen (36) in die Falten des Filtereinsatzes (3) aus Papier oder Faservlies alle umlaufenden Außenflächen vor dem Schließen des einstückigen Aufnahmerahmens (9) mit einer schnell aushärtenden Klebepaste (37) mittels eines Großflächenauftragegerätes (38) beschichtet werden.

11. Selbstabdichtende auswechselbare großflächige Kompaktfiltereinsätze mit Rahmen nach den Ansprüchen 1 bis 10, dadurch gekennzeichnet, daß der den Filtereinsatz (3) aufnehmende U-Profilrahmen (7) $\sim$ 590x590 mm oder $\sim$ 590x285 mm aus einem 0,6 mm dicken Kunststoffmaterial oder Blech gefertigt ist, dessen Hochkantflanschseiten(39) jeweils $\sim$ 15 mm lang sind und dessen vereinzelt gelochte (7a), durch die Gummischnüre z.B. (8) verdeckte, Rückenseiten (41) jeweils 25 mm betragen und dazu dienen, durch Schraubverbindungen (40) mit benachbarten U-Profilrahmen (7) oder Versteifungsblechen (42) zusammen steife und selbsttragende Filtertragegerüste zu bilden oder als Einzelrahmen mit den Filtereinsätzen (3) den Einbau in Standard-Taschen-Einbaurahmen (43) zu ermöglichen.

# Figur 1

## Figur 2

## Figur 3

Figur 4

9

10

Figur 5

9

2

11

12

2

5

10

12

10

12

0082106

## Figur 6

## Figur 7

## Figur 8

Figur 9

6

24

12

4,9

Figur 10

6

25

4,9

6

3

Figur 11

Figur 12

31,32

33,34,35

36

1

3

## Figur 13

10

38

1

3

33,34,35

37

36

36

9

Figur 14

0082106